# EUROPÄISCHE PATENTSCHRIFT

(11) **EP 0 944 910 B1**
(45) Veröffentlichungstag und Bekanntmachung des Hinweises auf die Patenterteilung: **14.08.2002**
(21) Anmeldenummer: 97952714.0
(22) Anmeldetag: 10.12.1997
(51) Int. Cl.: H01F 1/147, G01V 15/00

(54) **ANZEIGEELEMENT FÜR DIE VERWENDUNG IN EINEM MAGNETISCHEN DIEBSTAHLSICHERUNGSSYSTEM**
DISPLAY UNIT FOR USE IN A MAGNETIC ANTI-THEFT SYSTEM
ELEMENT INDICATEUR A UTILISER DANS UN SYSTEME ANTIVOL MAGNETIQUE

(30) Priorität: 13.12.1996 DE 19652004
(43) Veröffentlichungstag der Anmeldung: 29.09.1999
(73) Patentinhaber: Vacuumschmelze GmbH, 63450 Hanau (DE)
(72) Erfinder: RADELOFF, Christian, D-63486 Bruchköbel (DE); HAUSCH, Gernot, D-63505 Langenselbold (DE); ROTH, Ottmar, D-63584 Gründau (DE)
(74) Vertreter: Patentanwälte Westphal, Mussgnug & Partner
(86) Internationale Anmeldenummer: DE9702882
(87) Internationale Veröffentlichungsnummer: WO9826434

(56) Entgegenhaltungen:
- EP-A- 0 096 182
- EP-A- 0 121 649
- WO-A-90/03652
- DE-A- 3 120 168
- US-A- 4 298 862
- US-A- 4 536 229

## Beschreibung

Die Erfindung betrifft ein Anzeigeelement für die Verwendung in einem magnetischen Diebstahlsicherungssystem bestehend aus:
1. Einem länglichen, aus einer amorphen ferromagnetischen Legierung bestehenden Alarmstreifen und zumindest
2. einem aus einer halbhartmagnetischen Legierung bestehenden Aktivierungsstreifen.

Solche magnetischen Diebstahlsicherungssysteme und Anzeigeelemente sind hinlänglich bekannt und beispielsweise in der EP 0 121 649 B1 bzw. in der WO 90/03652 eingehend beschrieben. Zum einen gibt es magnetoelastische Systeme, bei denen der Aktivierungsstreifen zur Aktivierung des Alarmstreifens durch Aufmagnetisieren dient, zum anderen gibt es harmonische Systeme, bei denen der Aktivierungsstreifen nach seiner Aufmagnetisierung zur Deaktivierung des Alarmstreifens dient.

Zu den Legierungen mit halbhartmagnetischen Eigenschaften, die für die Vormagnetisierungsstreifen verwendet werden, gehören Co-Fe-V-Legierungen, die als Vicalloy bekannt sind, Co-Fe-Ni-Legierungen, die als Vacozet bekannt sind, sowie Fe-Co-Cr-Legierungen. Diese bekannten halbhartmagnetischen Legierungen enthalten hohe Kobaltanteile zum Teil von mindestens 45 Gew% und sind dementsprechend teuer. Ferner sind diese Legierungen im magnetisch schlußgeglühten Zustand spröde, so daß sie keine ausreichende Duktilität aufweisen um den Anforderungen bei den Anzeigeelementen für Diebstahlsicherungssystemen ausreichend gerecht zu werden. Eine Anforderung für die Anzeigeelemente bei magnetischen Diebstahlsicherungssystemen ist es nämlich, daß diese gegenüber Verbiegungen bzw. Verformungen unempfindlich sein müssen.

Ferner geht man mittlerweile dazu über, die Anzeigeelemente bei Diebstahlsicherungssystemen direkt in das zu sichernde Produkt einzubringen (Source Tagging). Dadurch ergibt sich zusätzlich die Anforderung, daß die halbhartmagnetischen Legierungen auch aus größerer Entfernung bzw. mit kleineren Feldern aufmagnetisiert werden können. Es hat sich gezeigt, daß die Koerzitivkraft auf Werte von höchstens 60 A/cm eingeschränkt werden muß.

Andererseits wird aber auch eine ausreichende Gegenfeldstabilität gefordert, wodurch der untere Grenzwert der Koerzitivkraft festgelegt wird. Hierbei sind nur Koerzitivkräfte von mindestens 30 A/cm geeignet.

Aufgabe der vorliegenden Erfindung ist es daher, die eingangs genannten Anzeigeelemente bezüglich ihrer Vormagnetisierungsstreifen dahingehend weiterzuentwickeln, daß die oben genannten Anforderungen erfüllt werden.

Erfindungsgemäß wird diese Aufgabe dadurch gelöst, daß die Vormagnetisierungsstreifen aus einer halbhartmagnetischen Legierung bestehen, die aus 0,1 bis 10 Gew% Nickel, 0,1 bis 15 Gew% Chrom, 0,1 bis 15 Gew% Molybdän und Rest Eisen in einem Gesamtanteil von Eisen, Nickel und Molybdän von weniger als 95 Gew% der Legierung zusammengesetzt ist.

Die Legierung kann ferner 0 bis 5 Gew% Kobalt und/oder wenigstens eines der Elemente Mn, Ti, Zr, Hf, V, Nb, Ta, W, Cu, Al, Si in individuellen Anteilen von weniger als 0,5 Gew% der Legierung und in einem Gesamtanteil von weniger als 1 Gew% der Legierung und/oder wenigstens eines der Elemente C, N, S, P, B, H, O in individuellen Anteilen von weniger als 0,2 Gew% der Legierung und in einem Gesamtanteil von weniger als 1 Gew% der Legierung enthalten. Die Legierung ist durch eine Koerzitivkraft H_{c} von 30 bis 60 A/cm und einer Remanenz Bᵣ von mindestens 1,0 T (10000 Gaus) gekennzeichnet.

Die erfindungsgemäßen Legierungen sind duktil und hervorragend vor dem Anlassen kalt verformbar, so daß auch Querschnittsverringerungen von mehr als 90 % möglich sind. Aus solchen Legierungen können Vormagnetisierungsstreifen hergestellt werden, insbesondere durch Kaltwalzen, die Dicken von 0,04 bis 0,07 mm aufweisen. Ferner zeichnen sich die erfindungsgemäßen Legierungen durch excellente magnetische Eigenschaften und durch eine hohe Korrosionsbeständigkeit aus.

Eine vorteilhafte Weiterentwicklung der Erfindung sind halbhartmagnetische Legierungen, die 3 bis 9 Gew% Nickel, 5 bis 11 Gew% Chrom sowie 6 bis 12 Gew% Molybdän enthalten.

Typischerweise werden die Vormagnetisierungsstreifen durch Erschmelzen der Legierung unter Vakuum und Gießen zu einem Gußblock hergestellt. Anschließend wird der Gußblock zu einem Band bei Temperaturen oberhalb von ca. 800°C warmgewalzt, danach bei einer Temperatur von ca. 1100°C zwischengeglüht und danach schnell abgekühlt. Anschließend findet eine Kaltverformung, zweckmäßigerweise Kaltwalzen, entsprechend einer Querschnittsverringerung von mindestens 75 %, vorzugsweise 85% oder höher, statt. Als letzter Schritt wird das kaltgewalzte Band bei Temperaturen von ca. 500°C bis 800°C angelassen. Danach werden die Vormagnetisierungsstreifen abgelängt.

Im folgenden ist die Erfindung anhand der Zeichnungen im einzelnen beschrieben. Dabei zeigen:
- Figur 1: das Entmagnetisierungsverhalten bei 80 A/cm von Fe-Ni-Mo-Cr-Legierungen in Abhängigkeit von der Koerzitivkraft,
- Figur 2: das Entmagnetisierungsverhalten bei 15 A/cm von Fe-Ni-Mo-Cr-Legierungen in Abhängigkeit von der Koerzitivkraft und
- Figur 3: das Magnetisierungsverhalten bei 120 A/cm von Fe-Ni-Mo-Cr-Legierungen in Abhängigkeit von der Koerzitivkraft.

Für die Tauglichkeit einer Legierung für einen Aktivierungsstreifen in einem Diebstahlsicherungssystem, insbesondere für das sogenannte "Source Tagging", ergeben sich folgende drei Forderungen:

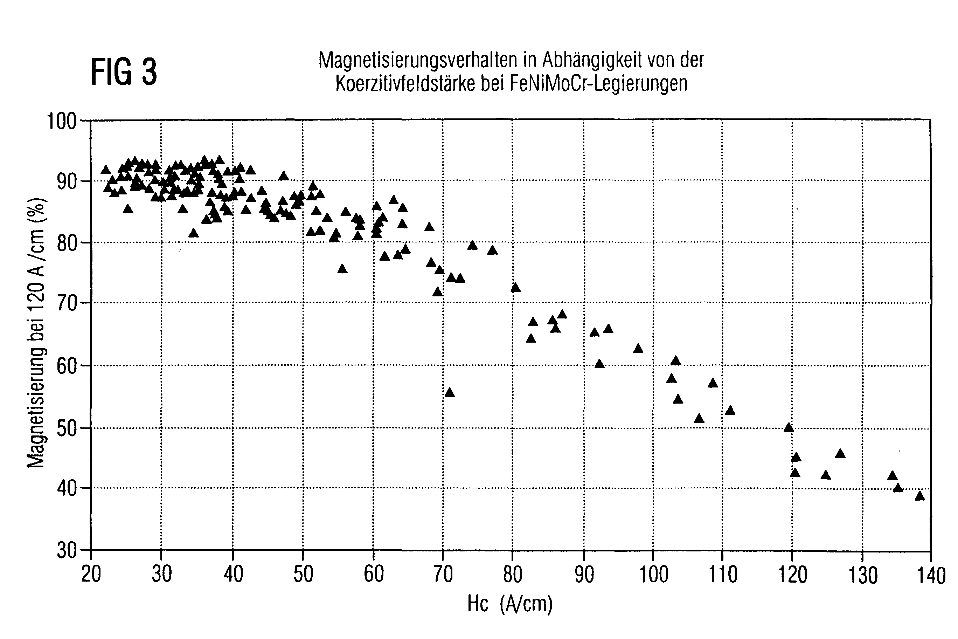

Das Verhältnis der Remanenz Bᵣ bei gegebener geringer Aufmagnetisierungsfeldstärke zur Remanenz Bᵣ bei einem Magnetfeld im kOe-Bereich soll nahezu 1 sein. Fig. 3 veranschaulicht dies bei den erfindungsgemäßen Legierungen.

Die Gegenfeldstabilität soll derart beschaffen sein, daß die Remanenz Bᵣ nach einem Gegenfeld von etlichen 10 A/cm immer noch 95 % seines ursprünglichen Wertes beibehält.

Schließlich soll die permanentmagnetische Induktion Bᵣ nach einem Entmagnetisierungszyklus mit einem vorgegebenen Magnetfeld lediglich 10 % vom ursprünglichen Wert behalten.

Im einzelnen heißt dies, daß eine Aufmagnetisierung des Aktivierungsstreifens, d.h. eine Aktivierung/Deaktivierung des Anzeigeelements, auch vor Ort erfolgen kann. Dort stehen aber in der Regel nur kleine Felder zur Verfügung. Die erreichte Remanenz soll sich nur wenig von dem Wert bei hohen Aufmagnetisierungsfeldern unterscheiden, um gleiches Verhalten der Anzeigeelemente zu garantieren.

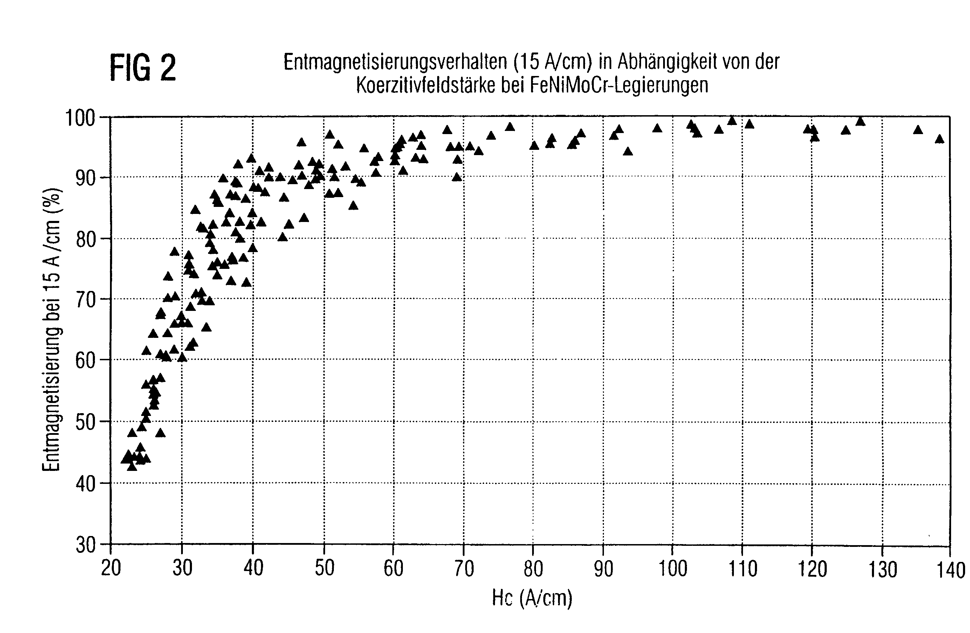

Die Anzeigeelemente müssen so beschaffen sein, daß sie in der Nähe der Spulen in den Detektionsschleusen in Folge eines dort erhöhten und evtl. in Gegenrichtung orientierten Feldes nur wenig ihre Remanenz Bᵣ ändern. Wie aus Fig. 2 zu sehen ist, weisen die erfindungsgemäßen Legierungen eine solche geforderte Gegenfeldstabilität auf.

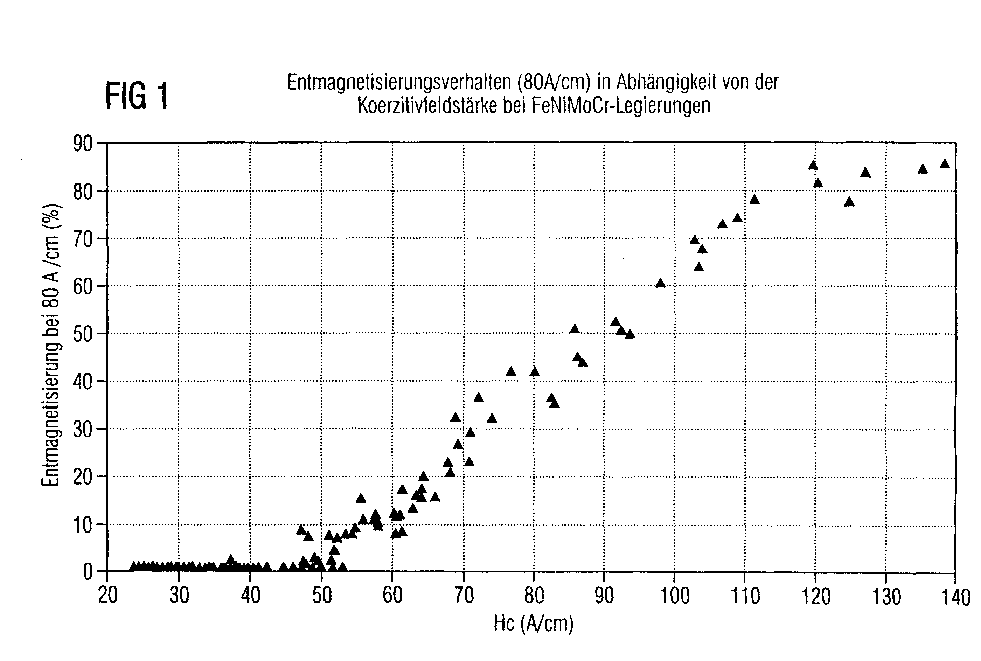

Schließlich müssen die Anzeigeelemente sich mit relativ kleinen Feldern entmagnetisieren, d.h. bei magnetoelastischen Anzeigeelementen deaktivieren bzw. bei harmonischen raktivieren, lassen. Fig. 1 zeigt diese Zusammenhänge bei den erfindungsgemäßen Legierungen.

Die gleichzeitige Erfüllung der obengenannten drei Forderungen ergibt für die zugänglichen Bereiche der Koerzitivkräfte H_{c} sehr starke Einschränkungen, da die drei Forderungen gegenläufig sind.

Die vorliegenden Legierungen werden typischerweise durch Gießen einer Schmelze aus den Bestandteilen Fe, Mo, Ni und Cr in einem Tiegel oder Ofen unter Vakuum oder unter einer inerten Atmosphäre hergestellt. Die Temperaturen liegen dabei bei ca. 1600°C.

Der Abguß erfolgt in eine Rundkokille. Die Gußbarren aus den vorliegenden Legierungen werden dann typischerweise durch Warmverformung, Zwischenglühen, Kaltverformung und weiterem Zwischenglühen bearbeitet. Das Zwischenglühen erfolgt zwecks Homogenisierung, Kornverfeinerung, Verformung oder der Ausbildung wünschenswerter mechanischer Eigenschaften, insbesondere einer hohen Duktilität.

Eine hervorragende Struktur wird beispielsweise durch folgende Bearbeitung erreicht: Warmbehandlung bei vorzugsweise Temperaturen oberhalb 800°C, schnelles Abkühlen und Anlassen. Bevorzugte Anlaßtemperaturen liegen bei 500 bis 800°C und die Anlaßzeiten typischerweise bei 1 Minute bis 24 Stunden. Mit den erfindungsgemäßen Legierungen ist insbesondere eine Kaltverformung entsprechend einer Querschnittsverringerung von mindestens 75 % vor dem Anlassen möglich.

Durch den Schritt des Anlassens wird die Koerzitivkraft und die Rechteckigkeit der magnetischen B-H-Schleife erhöht, was für die Anforderungen an Vormagnetisierungsstreifen wesentlich ist.

Das Herstellverfahren für besonders gute Vormagnetisierungsstreifen umfaßt folgende Schritte:
1. Gießen bei 1600°C,
2. Warmwalzen des Gußblocks bei Temperaturen oberhalb 800°C,
3. einstündiges Zwischenglühen bei ca. 1100°C,
4. schnelles Abkühlen in Wasser,
5. Kaltwalzen,
6. einstündiges Zwischenglühen bei ca. 1100°C,
7. schnelles Abkühlen in Wasser,
8. Kaltverformung entsprechend einer Querschnittsverringerung von 90 % und
9. mehrstündiges Anlassen bei ca. 650°C.
10.Ablängen der Aktivierungsstreifen

Mit diesen Verfahren wurden Aktivierungsstreifen hergestellt, die eine ausgezeichnete Koerzitivkraft H_{c} und eine sehr gute Remanenz Bᵣ aufwiesen. Die Magnetisierungseigenschaften und die Gegenfeldstabilität waren hervorragend.

Die Herstellung von Fe-Mo-Ni-Cr-Aktivierungsstreifen der in Rede stehenden Art ist nun anhand der folgenden Beispiele eingehend beschrieben.

### Beispiel 1

Eine Legierung mit 4,1 Gew% Nickel, 8,0% Molybdän, 8,0 Gew% Chrom und Rest Eisen wurde unter Vakuum erschmolzen, der resultierende Gußbarren wurde bei ca. 900°C warmgewalzt, bei 1100°C für eine 1 Stunde zwischengeglüht und in Wasser schnell abgekühlt. Nach einem anschließenden Kaltwalzen wurde das resultierende Band nochmals für eine Stunde bei 1100°C zwischengeglüht und in Wasser schnell abgekühlt. Entsprechend einer Querschnittsverringerung von 90% wurde das Band danach kaltgewalzt und für drei Stunden bei 650°C angelassen und luftgekühlt. Es wurde eine Koerzitivkraft H_{c} = 48 A/cm und eine Remanenz Bᵣ = 1,15 T gemessen.

### Beispiel 2

Eine Legierung mit 5,9 Gew% Nickel, 10,1 Gew% Molybdän, 8,5 Gew% Chrom und Rest Eisen wurde wie nach Beispiel 1 bearbeitet, jedoch entsprechend einer Querschnittsverringerung von 95 % kaltgewalzt und bei einer Temperatur von 600°C angelassen. Es wurde eine Koerzitivkraft H_{c} von 60 A/cm und eine Remanenz Bᵣ vom 1,07 T gemessen.

### Beispiel 3

Es wurde eine Legierung mit 4,0 Gew% Nickel, 8,3 Gew% Molybdän, 10,4 Gew% Chrom, 0,3 Gew% Titan und Rest Eisen wie im Beispiel 1 hergestellt. Jedoch wurde hier das Band entsprechend einer Querschnittsverringerung von 95 % kaltgewalzt und anschließend bei 625°C angelassen. Es wurde eine Koerzitivfeldstärke H_{c} von 35 A/cm und einer Remanenz Bᵣ von 1,12 T gemessen.

### Beispiel 4

Es wurde eine Legierung mit 4,1 Gew% Nickel, 8,0 Gew% Molybdän, 9,9 Gew% Chrom und Rest Eisen wie im Beispiel 1 hergestellt. Jedoch wurde das Band entsprechend einer Querschnittsverringerung von 95 % kaltgewalzt und bei einer Temperatur von 625°C angelassen. Es wurde eine Koerzitivfeldstärke H_{c} von 47 A/cm und eine Remanenz Bᵣ von 1,12 T gemessen.

Bei allen Ausführungsbeispielen ergab sich ein befriedigendes Magnetisierungsverhalten und eine brauchbare Gegenfeldstabilität.

## Patentansprüche

1. Anzeigeelement für die Verwendung in einem magnetischen Diebstahlsicherungssystem bestehend aus:
1) einem länglichen, aus einer amorphen ferromagnetischen Legierung bestehenden Alarmstreifen und zumindest
2) einem aus einer halbhartmagnetischen Legierung bestehenden Aktivierungsstreifen,
**dadurch gekennzeichnet,**
a) daß die halbhartmagnetische Legierung aus
| | |
|---|---|
| 0,1 - 10 Gew% Ni | 0,1 - 15 Gew% Cr |
| 0,1 - 15 Gew% Mo | Rest Fe und |
in einem Gesamtanteil an Fe, Ni und Mo von weniger als 95 Gew% der Legierung besteht,
b) daß die Legierung ferner enthalten kann,
- 0 - 5 Gew% Co und/oder
- wenigstens eines der Elemente Mn, Ti, Zr, Hf, V, Nb, Ta, W, Cu, Al, Si in individuellen Anteilen von weniger als 0,5 Gew% der Legierung und in einem Gesamtanteil von weniger als 1 Gew% der Legierung und/oder
- wenigstens eines der Elemente C, N, S, P, B, H, O in individuellen Anteilen von weniger als 0,2 Gew% der Legierung und in einem Gesamtanteil von weniger als 1 Gew% der Legierung, und
c) daß die halbhartmagnetische Legierung eine Koerzitivkraft H_{c} von 30 - 60 A/cm und eine Remanenz Bᵣ von mindestens 1,0 T (10.000 Gauss) aufweist.

2. Anzeigeelement nach Anspruch 1,
**dadurch gekennzeichnet,**
**daß** die halbhartmagnetische Legierung aus
| | |
|---|---|
| 3 - 9 Gew% Ni | 5 - 11 Gew% Cr |
| 6 - 12 Gew% Mo | Rest Fe besteht. |

3. Verfahren zum Herstellen eines Aktivierungsstreifens nach den Ansprüchen 1 oder 2,
**gekennzeichnet durch** folgende Verfahrensschritte:
1) Erschmelzen der Legierung unter Vakuum oder Schutzgas und anschließendes Gießen zu einem Gußblock;
2) Warmverformen des Gußblocks zu einem Band bei Temperaturen oberhalb ca. 800 °C;
3) Zwischenglühen des Bandes bei einer Temperatur von ca. 1100 °C;
4) schnelles Abkühlen;
5) Kaltverformen entsprechend einer Querschnittsverringerung von mindestens 85%;
6) Anlassen bei Temperaturen zwischen 500 °C und 800 °C.
7) Ablängen der Aktivierungsstreifen.

## Claims

1. Display element for use in a magnetic anti-theft system consisting of:
1) an elongated alarm strip consisting of an amorphous ferromagnetic alloy and at least
2) one activation strip consisting of a medium-hard magnetic alloy,
**characterised in that**
a) the medium-hard magnetic alloy consists of
| | |
|---|---|
| 0.1 - 10 % by weight Ni | 0.1 - 15 % by weight Cr |
| 0.1 - 15 % by weight Mo | with the remainder Fe and |
with the total Fe, Ni and Mo content less than 95 % by weight of the alloy,
b) the alloy may furthermore contain
- 0 - 5 % by weight Co and/or
- at least one of the elements Mn, Ti, Zr, Hf, V, Nb, Ta, W, Cu, Al and Si with an individual content of less than 0.5 % by weight of the alloy and a total content of less than 1 % by weight of the alloy and/or
- at least one of the elements C, N, S, P, B, H and O with an individual content of less than 0.2 % by weight of the alloy and a total content of less than 1 % by weight of the alloy, and
c) the medium-hard magnetic alloy displays a coercive force H_{c} of 30 - 60 A/cm and remanence Bᵣ of at least 1.0 T (10 000 gauss).

2. Display element according to claim 1, **characterised in that** the medium-hard magnetic alloy consists of
| | |
|---|---|
| 3 - 9 % by weight Ni | 5 - 11 % by weight Cr |
| 6 - 12 % by weight Mo | with the remainder Fe. |

3. Process for the production of an activation strip according to claim 1 or claim 2, **characterised by** the following steps:
1) melting the alloy in vacuo or in an inert-gas atmosphere and then casting it to form an ingot;
2) hot working the ingot to form a strip at temperatures in excess of approximately 800°C;
3) interannealing the strip at a temperature of approximately 1100°C;
4) rapid cooling;
5) cold working corresponding to a cross-sectional reduction of at least 85 %, and
6) tempering at temperatures between 500°C and 800°C.
7) Cutting the activation strips to length.

## Revendications

1. Elément indicateur pour l'utilisation dans un système antivol magnétique qui consiste en
1) une bande d'alarme allongée formée d'un alliage ferromagnétique et au moins
2) une bande d'activation formée d'un alliage magnétique mi-dur
**caractérisé en ce que**
a) l'alliage magnétique mi-dur consiste en
0,1 - 10 % en poids de Ni
0,1 - 15 % en poids de Cr
0,1 - 15 % en poids de Mo
le reste en fer
dans une proportion totale en Fe, Ni et Mo de moins de 95 % en poids de l'alliage,
b) l'alliage peut contenir en outre
- de 0 à 5 % en poids de Co et/ou
- au moins un des éléments Mn, Ti, Zr, Hf, V, Nb, Ta, W, Cu, Al, Si en proportions individuelles de moins de 0,5 % en poids de l'alliage et en proportion totale de moins de 1 % en poids de l'alliage et/ou
- au moins un des éléments C, N, S, P, B, H, O en proportions individuelles de moins de 0,2 % en poids de l'alliage et en proportion totale de moins de 1 % en poids de l'alliage et
c) **en ce que** l'alliage magnétique mi-dur possède une force coercitive H_{c} de 30 à 60 A/cm et une rémanence Bᵣ d'au moins 1,0 T (10.000 Gauss).

2. Elément indicateur selon la revendication 1,
**caractérisé en ce que**
l'alliage magnétique mi-dur consiste en
3 à 9 % en poids de Ni
5 à 11 % en poids de Cr
6 à 12 % en poids de Mo
le reste étant en fer.

3. Procédé de production d'une bande d'activation selon l'une quelconque des revendications 1 ou 2,
**caractérisé par** les étapes de procédé suivantes :
1) élaboration de l'alliage sous vide ou gaz protecteur et coulée consécutive en un lingot,
2) déformation à chaud du lingot en une bande à des températures au-dessus d'environ 800°C,
3) recuit intermédiaire de la bande à une température d'environ 1100°C,
4) refroidissement rapide,
5) déformation à froid d'une manière correspondant à une réduction de la section d'au moins 85 %,
6) revenu à des températures comprises entre 500°C et 800°C,
7) tronçonnage des bandes d'activation.
